# EUROPÄISCHE PATENTSCHRIFT

(11) **EP 0 916 530 B1**
(45) Veröffentlichungstag und Bekanntmachung des Hinweises auf die Patenterteilung: **18.12.2002**
(21) Anmeldenummer: 98120280.7
(22) Anmeldetag: 27.10.1998
(51) Int. Cl.: B60G 21/05

(54) **Verbundlenkerachse für Kraftfahrzeuge**
Twist beam axle
Essieu à traverse déformable en torsion

(30) Priorität: 14.11.1997 DE 29720207 U
(43) Veröffentlichungstag der Anmeldung: 19.05.1999
(73) Patentinhaber: BENTELER AG, D-33104 Paderborn (DE)
(72) Erfinder: Gläser, Klaus Dipl.-Ing., 33154 Salzkotten (DE); Mehren, Claus Dr. Dipl.-Ing., 33100 Paderborn (DE)
(74) Vertreter: Ksoll, Peter, Dr.-Ing.

(56) Entgegenhaltungen:
- EP-A- 0 552 537
- DE-A- 2 425 740
- DE-A- 2 430 048
- DE-A- 19 613 212
- DE-B- 2 735 939
- US-A- 4 165 098
- US-A- 4 432 564
- PATENT ABSTRACTS OF JAPAN vol. 015, no. 186 (M-1112), 14. Mai 1991 (1991-05-14) & JP 03 045409 A (ISUZU MOTORS LTD), 27. Februar 1991 (1991-02-27)

## Beschreibung

Die Erfindung betrifft eine Verbundlenkerachse für Kraftfahrzeuge.

Verbundlenkerachsen generell bieten die Vorteile eines einfachen Aufbaus bei geringem Raumgewicht und guten kinematischen Eigenschaften. Der die beiden Längslenker verbindende Querlenker wirkt hierbei als Torsionsstab, so dass sich bei gleichzeitigem Einfedern eine Längslenkercharakteristik und bei wechselseitigem Einfedern eine Schräglenkerchärakteristik ergibt.

Durch die DE-AS 27 35 939 ist ein Achsverbund für Kraftfahrzeuge bekannt, bei welchem zwei rohrförmige Längslenker durch ein V- oder U-förmiges Torsionsprofil winkelsteif miteinander verbunden sind. Das Torsionsprofil ist einlagig gestaltet. In den Übergangsbereichen vom Torsionsprofil auf die Längslenker sind zur Erhöhung der Biegesteifigkeit Knotenbleche mit dem Torsionsprofil und den Längslenkern verschweißt.

Die JP-A-03 045 409 offenbart eine Verbundlenkerachse für Kraftfahrzeuge nach dem Oberbegriff des Anspruchs 1, bei der in den Übergangsbereichen zwischen dem Torsionsprofil und den Längslenkern Verstärkungsbleche eingefügt sind. Die Enden des Torsionsprofils besitzen eine auf die Außenkontur der Längslenker angepasste Konfiguration und laufen mit ihren Scheitelbereichen auf den Oberseiten der Längslenker aus. Die Verstärkungsbleche sind jeweils mit einem Schenkel am Torsionsprofil in dessen Scheitelbereich und mit dem anderen Schenkel am radträgerseitigen Längenabschnitt des Längslenkers angeschweißt.

Zum Stadt der Technik zählt ferner die US-A-4,165,098. Hier weisen die Längslenker über ihre gesamte Länge an ihren unteren Längskanten Verstärkungsbleche auf, auf denen sich das Torsionsprofil abstützt.

Der Erfindung liegt hiervon ausgehend die Aufgabe zugrunde, eine hinsichtlich Steifigkeits- und Spurweitenanpassung flexibel auslegbare Verbundlenkerachse zu schaffen, welche im Festigkeitsverhalten verbessert ist und eine höhere Lebensdauer erreicht.

Die Lösung dieser Aufgabe besteht nach der Erfindung in einer Verbundlenkerachse mit den Merkmalen des Anspruchs 1.

Bei dieser Verbundlenkerachse besitzen die Enden des Torsionsprofil eine auf die Kontur der Längslenker angepasste Konfiguration und laufen mit ihren hier liegenden endseitigen Scheitelbereichen auf der Oberseite der Längslenker aus. Die Enden sind dann umlaufend mit den Längslenkern verschweißt. Hierdurch wird ein hochspannungsbelastbarer Übergang vom Torsionsprofil auf einen Längslenker erreicht, der auch Dauerbelastungen zuverlässig standhält. Wesentlich ist weiterhin, dass die Verstärkungsbleche mit einem Schenkel am Torsionsprofil nahe am Scheitel, also im Scheitelbereich, angeschweißt sind. Am Längslenker sind die Verstärkungsbleche mit ihrem anderen Schenkel, ausgehend vom Torsionsprofil zum radträgerseitigen Ende hin abfallend eingeschweißt, wobei sie stirnseitig den Radträger bereichsweise umgreifen und mit diesem verbunden sind.

Die Gesamtkonfiguration der Verbundlenkerachse erreicht eine auf die dynamischen Belastungen abgestimmte Auslegung der Widerstandsmomente. Hierzu trägt auch der V- oder U-förmige Querschnitt des Torsionsprofils bei. Die sich ergebende Einheit von Torsionsprofil, Längslenker, Radträger und Verstärkungsblech ermöglichen eine effiziente Überleitung der Torsions- und Biegekräfte von den Längslenkern in das Torsionsprofil, wo sie kompensiert werden. Damit besitzt die erfindungsgemäße Verbundlenkerachse ein besonders gutes statisches und dynamisches Lastverhalten und erreicht eine hohe Lebensdauer.

Die Steifigkeitsanpassung der Verbundlenkerachse kann je nach Fahrzeugtyp über eine Variation der Dicke des Torsionsprofils vorgenommen werden. Eine für verschiedene Modellreihen notwendige Spurweitenanpassung kann durch eine geometrische Anpassung der Radträger, insbesondere durch den Einsatz unterschiedlich dicker Flansche am Radträger oder eine Variation der Flanschform realisiert werden. Dies ist bei der erfindungsgemäßen Verbundlenkerachse problemlos möglich. Die Längslenker können auf jede technisch übliche Art hergestellt werden, beispielsweise durch Biegen, Schlagen oder Hydroformen.

Die Herstellung der Verbundlenkerachse ist rationell und sehr gut zu automatisieren. Die Qualität der erfindungsgemäßen Verbundlenkerachse ist gegenüber den bekannten Bauarten weiter verbessert.

Die Verbundlenkerachse kann sowohl aus Stahl oder Aluminium bzw. einer Kombination dieser beiden Werkstoffe hergestellt werden.

Zur Gewichtsreduzierung einer Verbundlenkerachse können das Torsionsprofil und/oder die Verstärkungsbleche gelocht sein (Anspruch 2). Die Ausnehmungen bzw. Lochungen sind in Bauteilbereichen angeordnet, die geringen Spannungen bzw. Belastungen unterworfen sind und nicht zum Steifigkeitsverhalten beitragen.

Gemäß den Merkmalen des Anspruchs 3 umfasst der Radträger einen U-förmig konfigurierten Rahmen mit dreieckförmig ausgebildeten Seitenwänden. In den Seitenwänden sind an einen Längslenker angepasste Ausnehmungen vorhanden, mit denen der Radträger den Längslenker übergreift. Auf der dem Torsionsprofil abgewandten Seite ist zwischen den Seitenwänden eine Flanschplatte angefügt, über welche die Anbindung der Radaufhängung erfolgt.

Über den Radträger werden auch die Stoßdämpfer befestigt.

Durch die geometrische Anpassung des Radträgers kann je nach Modellreihe eine Anpassung der Spurweite vorgenommen werden. Hierbei können beispielsweise unterschiedlich dicke Flanschplatten verwendet werden oder der Rahmen in seinen Abmessungen entsprechend angepasst werden.

Eine Veränderung der Fertigungslinie für die Verbundlenkerachse ist bei wechselnden Serien nicht erforderlich. Die Konstruktion bzw. das Design der Verbundlenkerachse bleibt unverändert. Eine Anpassung in der Steifigkeit erfolgt durch die Verwendung unterschiedlich dicker Torsionsprofile. Die Spurweitenanpassung erfolgt durch Variation der Radträger bzw. deren Rahmen oder Flanschplatten.

Zur Verbesserung der Festlegung des Radträgers am Längslenker sind diese im Anbindungsbereich oberseitig abgeflacht (Anspruch 4). Zusätzlich können in den Seitenwänden eines Radträgers nach den Merkmalen des Anspruchs 5 versteifende Ausprägungen vorgesehen sein.

Die Erfindung ist nachfolgend anhand eines in der Zeichnung dargestellten Ausführungsbeispiels näher beschrieben.

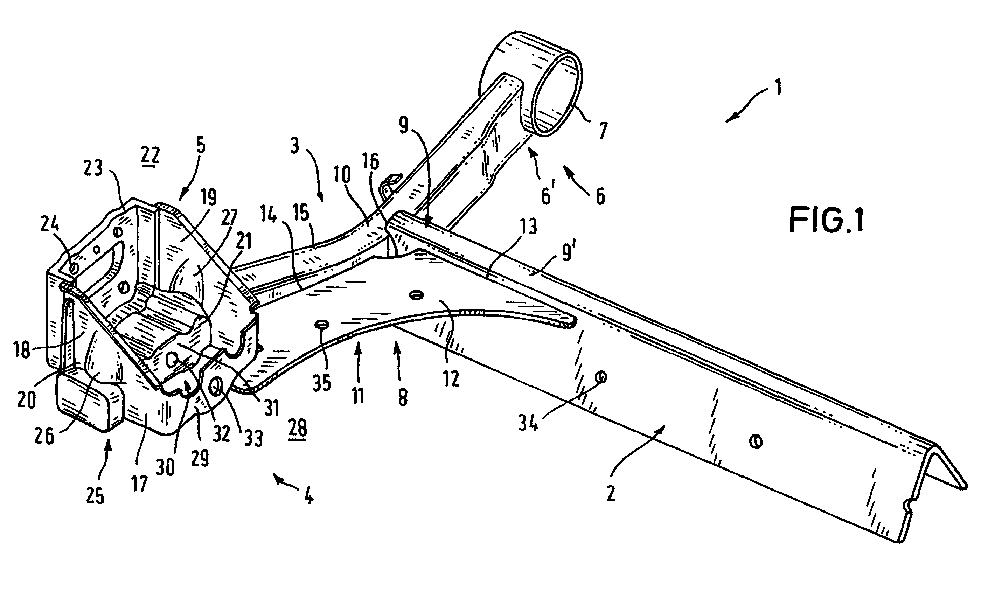

Die Figur 1 zeigt einen Ausschnitt aus einer Verbundlenkerachse für ein Kraftfahrzeug in perspektivischer Darstellung, wobei der endseitige Abschnitt 1 eines Torsionsprofils 2 und ein Längslenker 3 dargestellt sind.

Der biege- und torsionssteife Lenker 3 ist aus einem Rohr hergestellt und S-förmig gebogen. An einem Ende 4 des Lenkers 3 ist ein Radträger 5 angeschweißt. Am anderen Ende 6 des Längslenkers 3 ist eine Lagerbuchse 7 für die Anlenkung der Verbundlenkerachse am Tragrahmen eines Kraftfahrzeugs angeordnet. Im Anschlussbereich 6' ist das Ende 6 seitlich eingezogen zu einem annähernd rechteckigen Querschnitt und stirnseitig an die Außenkontur der Lagerbuchse 7 angepasst.

Das Torsionsprofil 2 besitzt einen V-förmigen Querschnitt. Das an den Längslenker 3 stoßende Ende 8 des Torsionsprofils 2 weist einen an die Außenkontur des Längslenkers angepasste Konfiguration auf, so dass es bündig am Längslenker 3 anliegt und mit diesem verschweißt ist. Der am Ende 8 liegende Scheitelbereich 9 des Torsionsprofils 2 läuft auf der Oberseite 10 des Längslenkers 3 aus.

Die Verbindung zwischen den Längslenkern 3 und dem Torsionsprofil 2 erfolgt durch Schweißen. Zur Erhöhung der Biegesteifigkeit ist im Übergangsbereich 11 zwischen dem Torsionsprofil 2 und dem Längslenker 3 ein Verstärkungsblech 12 eingeschweißt. Hierbei ist das Verstärkungsblech 12 mit einem Schenkel 13 am Torsionsprofil 2 entlang dessen Scheitelbereich 9 und mit dem anderen Schenkel 14 am radträgerseitigen Längenabschnitt 15 des Längslenkers 3 angeschweißt und zwar so, dass das Verstärkungsblech 12 vom Torsionsprofil 2 ausgehend zum radträgerseitigen Ende 4 des Längslenkers 3 hin abfällt.

Der Schenkel 13 läuft spitz zum Torsionsprofil 2 hin aus, wodurch im Gebiet des größten Steifigkeitssprunges am Übergang vom Torsionsprofil 2 zum Verstärkungsblech 12 die örtliche Spannungsverteilung positiv beeinflusst wird. Wichtig ist auch, dass das Verstärkungsblech 12 kurz unterhalb des Scheitels 9' angesetzt ist. Damit werden die Torsionseigenschaften des Torsionsprofils 2 nicht nachteilig beeinflusst und die Verbindungsnaht wenig belastet.

Im Übergangsbereich 11 weist das Verstärkungsblech 12 eine halbrunde Aussparung 16 auf. Hierdurch kann eine Kerbwirkung unter dem Einfluss der äußeren Belastung am Übergang von Torsionsprofil 2 und Längslenker 3 vermieden werden. Ferner trägt die Aussparung 16 zur Verbesserung der Oberflächenbehandlung insbesondere hinsichtlich des Korrosionsschutzes im Schweißnahtbereich und zur Gewichtsreduktion bei.

Stirnseitig umgreift das Verstärkungsblech 12 den Radträger 5 bereichsweise, wobei es mit diesem ebenfalls schweißtechnisch verbunden ist.

Der Radträger 5 umfasst einen U-förmig konfigurierten Rahmen 17 mit im wesentlichen dreieckförmig ausgebildeten Seitenwänden 18, 19. Der Rahmen 17 übergreift mit den Seitenwänden 18, 19 den Längslenker 3. Hierzu sind in den Seitenwänden 18, 19 an die Kontur des Längslenkers 3 am radträgerseitigen Ende 4 angepasste Ausnehmungen 20, 21 vorgesehen. Auf der dem Torsionsprofil 2 abgewandten Seite 22 des Rahmens 17 ist zwischen den Seitenwänden 18, 19 eine Flanschplatte 23 angefügt. Die Flanschplatte 23 verfügt über Öffnungen 24 zur Anbindung der Radaufhängung.

Man erkennt weiterhin, dass der Längslenker 3 im Anbindungsbereich 25 des Radträgers 5 ober- und unterseitig abgeflacht ist. Ferner weisen die Seitenwände 18, 19 des Radträgers 5 versteifende Ausprägungen 26, 27 auf. Diese Maßnahmen tragen zu einer hochstabilen Festlegung des Radträgers 5 am Ende 4 des Längslenkers 3 bei. Diese erfolgt rationell und voll automatisiert während des Herstellungsprozesses einer Verbundlenkerachse.

Zur innen liegenden Seite 28 der Verbundlenkerachse, also zum Torsionsprofil 2 hin steht der Rahmen 17 des Radträgers 5 über, so dass zwischen dem Längslenker 3 und der Rückwand 29 des Rahmens 17 ein Freiraum 30 verbleibt. Hier erfolgt die Anbindung eines Stoßdämpfers, wozu ein am Ende 4 des Längslenkers 3 ausgebildetes Auge 31 mit der Öffnung 32 und eine Öffnung 33 in der Rückwand 29 dienen.

Ferner erkennt man in der Figur 1, dass sowohl das Torsionsprofil 2 als auch das Verstärkungsblech mit Ausnehmungen 34, 35 versehen sind. Diese Lochungen tragen ebenfalls zu einer Gewichtsreduzierung einer Verbundlenkerachse bei.

Bei unterschiedlichen Modellreihen erfolgt eine Steifigkeitsanpassung der Verbundlenkerachse durch eine entsprechende Anpassung der Dicke des Torsionsprofils 2. Eine notwendige Spurbreitenanpassung wird durch eine entsprechende geometrische Auslegung des Radträgers 5 insbesondere durch entsprechende Abmessungsveränderungen des Rahmens 17 bzw. der Flanschplatte 23 vorgenommen. Auf diese Weise ist eine Fertigung von Verbundlenkerachsen für verschiedene Fahrzeugtypen möglich, ohne dass eine Veränderung der Basiskonzeption erforderlich ist.

### Bezugszeichenaufstellung

- 1 -: Abschnitt
- 2 -: Torsionsprofil
- 3 -: Längslenker
- 4 -: Ende von 3
- 5 -: Radträger
- 6 -: Ende von 3
6' - Anschlußbereich
- 7 -: Lagerbuchse
- 8 -: Ende von 2
- 9 -: Scheitelbereich
9' - Scheitel
- 10 -: Oberseite
- 11 -: Übergangsbereich
- 12 -: Verstärkungsblech
- 13 -: Schenkel von 12
- 14 -: Schenkel von 12
- 15 -: Längenabschnitt von 3
- 16 -: Aussparung
- 17 -: Rahmen
- 18 -: Seitenwand von 17
- 19 -: Seitenwand von 17
- 20 -: Ausnehmung in 18
- 21 -: Ausnehmung in 19
- 22 -: Seite von 17
- 23 -: Flanschplatte
- 24 -: Öffnungen in 23
- 25 -: Anbindungsbereich
- 26 -: Ausprägung
- 27 -: Ausprägung
- 28 -: Seite
- 29 -: Rückwand
- 30 -: Freiraum
- 31 -: Auge
- 32 -: Öffnung
- 33 -: Öffnung
- 34 -: Ausnehmung
- 35 -: Ausnehmung

## Patentansprüche

1. Verbundlenkerachse für Kraftfahrzeuge, welche zwei durch ein Torsionsprofil (2) mit V- oder U-förmigem Querschnitt verbundene rohrförmige Längslenker (3) umfasst, wobei in den Übergangsbereichen (11) zwischen dem Torsionsprofil (2) und den Längslenkern (3) zur Erhöhung der Biegesteifigkeit Verstärkungsbleche (12) eingefügt sind und die Enden (8) des Torsionsprofils (2) eine auf die Außenkontur der Längslenker (3) angepasste Konfiguration besitzen und mit den hier liegenden Scheitelbereichen (9) auf den Oberseiten (10) der Längslenker (3) auslaufen, wobei die Verstärkungsbleche (12) jeweils mit einem Schenkel (13) am Torsionsprofil (2) in dessen Scheitelbereich (9) und mit dem anderen Schenkel (14) am radträgerseitigen Längenabschnitt (15) des Längslenkers (3) angeschweißt sind, **dadurch gekennzeichnet, dass** die Verstärkungsbleche (12) ausgehend vom Torsionsprofil (2) zum radträgerseitigen Ende (4) der Längslenker (3) hin abfallend angeordnet, stirnseitig einen Radträger (5) bereichsweise umgreifen und mit diesem verbunden sind.

2. Verbundlenkerachse nach Anspruch 1, **dadurch gekennzeichnet, dass** das Torsionsprofil (2) und/oder die Verstärkungsbleche (12) gelocht sind.

3. Verbundlenkerachse nach Anspruch 1 oder 2, **dadurch gekennzeichnet, dass** der Radträger (5) einen U-förmig konfigurierten Rahmen (17) umfasst mit dreieckförmig ausgebildeten Seitenwänden (18, 19), die den Längslenker (3) mit hieran angepassten Ausnehmungen (20, 21) übergreifen und zwischen den Seitenwänden (18, 19) auf der dem Torsionsprofil (2) abgewandten Seite (22) eine Flanschplatte (23) angefügt ist.

4. Verbundlenkerachse nach einem der Ansprüche 1 bis 3, **dadurch gekennzeichnet, dass** die Längslenker (3) im Anbindungsbereich (25) des Radträgers (5) oberseitig abgeflacht sind.

5. Verbundlenkerachse nach Anspruch 3 oder 4, **dadurch gekennzeichnet, dass** die Seitenwände (18, 19) des Radträgers (5) versteifende Ausprägungen (26, 27) aufweisen.

## Claims

1. A composite control shaft for motor vehicles comprising two tubular longitudinal control arms (3) connected by a torsion profile (2) having a V or U-shaped cross-section, wherein reinforcing metal plates (12) for increasing the resistance to bending are inserted into the transition regions (11) between the torsion profile (2) and the longitudinal control arms (3) and the ends (8) of the torsion profile (2) have a configuration adapted to the outer contour of the longitudinal control arms (3) and the apical regions (9) disposed on the said outer contour end on the top sides (10) of the longitudinal control arms (3), wherein the reinforcing plates (12) each have one limb (13) welded to the apical region (9) of the torsion profile (2) and the other limb (14) welded to the longitudinal portion (15) of the longitudinal control arm (3) on the same side as the wheel carrier, **characterised in that** the reinforcing plates (12) starting from the torsion profile (2) slope down to the wheel-carrier end (4) of the longitudinal control arms (3) and at their ends surround parts of a wheel carrier (5) and are connected thereto.

2. A composite control shaft according to claim 1, **characterised in that** the torsion profile (2) and/or the reinforcing plates (12) are perforated.

3. A composite control shaft according to claim 1 or 2, **characterised in that** the wheel carrier (5) has a U-shaped frame (17) with triangular side walls (18, 19) which extend over the longitudinal control arm (3) via recesses (20, 21) adapted thereto and a flange plate (23) is disposed between the side walls (18, 19) on the side (22) remote from the torsion profile (2).

4. A composite control shaft according to any of claims 1 to 3, **characterised in that** the longitudinal control arms (3) are flattened at the top in the region (25) where the wheel carrier (5) is connected.

5. A composite control shaft according to claim 3 or 4, **characterised in that** the side walls (18, 19) of the wheel carrier (5) have reinforcing embossed parts (26, 27).

## Revendications

1. Essieu avec bras oscillant combiné pour véhicules automobiles, qui comprend deux bras oscillants longitudinaux (3) tubulaires assemblés par un profilé de torsion (2) avec une section en forme de V ou de U, sachant que des plaques de raidissement (12) sont posées dans les zones de transition (11) entre le profilé de torsion (2) et les bras oscillants longitudinaux (3) pour augmenter la résistance à la flexion et les extrémités (8) du profilé de torsion (2) ont une forme adaptée au contour extérieur des bras oscillants longitudinaux (3) et finissent avec les zones frontales (9), situées ici, sur les faces supérieures (10) des bras oscillants longitudinaux (3), les plaques de raidissement (12) étant soudées chacune avec une branche (13) contre le profilé de torsion (2) dans la zone frontale (9) de celui-ci et avec l'autre branche (14) contre la partie longitudinale (15) du bras oscillant longitudinal (3), du côté du support de roue, **caractérisé en ce que** les plaques de raidissement (12) sont disposées avec une inclinaison à partir du profilé de torsion (2) vers l'extrémité (4), du côté du support de roue, du bras oscillant longitudinal (3), entourent partiellement sur le côté frontal un support de roue (5) et sont assemblées avec celui-ci.

2. Essieu avec bras oscillant combiné selon la revendication 1, **caractérisé en ce que** le profilé de torsion (2) et/ou les plaques de raidissement (12) sont perforés.

3. Essieu avec bras oscillant combiné selon la revendication 1 ou 2, **caractérisé en ce que** le support de roue (5) comporte un cadre (17) conçu en forme de U avec des parois latérales (18, 19) triangulaires, qui s'engagent au-dessus des bras oscillants longitudinaux (3) avec des évidements (20, 21) adaptés à cela et une plaque à brides (23) est accolée entre les parois latérales (18, 19) sur le côté (22) opposé au profilé de torsion (2).

4. Essieu avec bras oscillant combiné selon une des revendications 1 à 3, **caractérisé en ce que** les bras oscillants longitudinaux (3) sont aplatis sur la face supérieure dans la zone d'assemblage (25) avec le support de roue (5).

5. Essieu avec bras oscillant combiné selon la revendication 3 ou 4, **caractérisé en ce que** les parois latérales (18, 19) du support de roue (5) comportent des zones bombées (26, 27) destinées à former des renforts.
